# EUROPÄISCHE PATENTANMELDUNG

(11) **EP 2 080 964 A1**
(43) Veröffentlichungstag der Anmeldung: **22.07.2009**
(21) Anmeldenummer: 09075032.4
(22) Anmeldetag: 18.01.2009
(51) Int. Cl.: F24J 2/52, H01L 31/042

(54) **Befestigungsvorrichtung für Photovoltaikmodule auf Schrägdächern**

(30) Priorität: 21.01.2008 DE 102008005713
(71) Anmelder: SOLON SE, 12489 Berlin (DE)
(72) Erfinder: Schwarze, Sascha Oliver, 12277 Berlin (DE); Schäfer, Maik, 12247 Berlin (DE)

(57) **Zusammenfassung**

Photovoltaikmodule werden auf Schrägdächern an Dachkonstruktionen (31) aus Dachsparren (4) und Dachlatten (5) mit die Dachhaut (3) durchdringenden Befestigungsvorrichtungen (1) als starre Dachhaken befestigt. Dazu müssen die Dachsteine (6) nachgearbeitet werden, wodurch Garantieansprüche erlöschen und die Dachhaut (3) durch Druckkräfte bei Wind- und Schneelasten gefährdet wird. Zur Vermeidung dieser Nachteile werden bei der erfindungsgemäßen Lösung die starren Dachhaken durch flexible Halteelemente (24), z.B. Seile (10) oder Flachbänder (22), ersetzt. Sie werden ebenfalls an der Dachkonstruktion (31) befestigt, aber zwischen den Dachsteinen (6) herausgeführt und die Photovoltaikmodule (2) direkt an ihren Rahmen, oder über Schienensysteme daran befestigt. Vorteile gegenüber der Dachhakenlösung sind eine schnellere und leichtere Fertigstellung der Befestigungsvorrichtung (1) und der Fortfall der Nachbearbeitung der Dachsteine (6) und damit der Fortfall möglicher Personengefährdung. Die Dachhaut (3) bleibt ungestört und die Garantie bleibt bestehen. Die hierbei auftretenden Kräfte wirken parallel zur Dachhaut (3), damit wird deren Beschädigung durch Druckkräfte bei auftretenden Wind- und Schneelasten vermieden. Bei Anwendung flexibler Halteelemente (24) mit veränderter Krafteinleitung kann die Befestigungsvorrichtung (1) materialsparend und kostengünstig ausgeführt werden.

## Beschreibung

### Beschreibung

Die Erfindung bezieht sich auf eine Befestigungsvorrichtung für Photovoltaikmodule auf Schrägdächern mit zumindest einem Halteelement mit einem dachseitigen Anschluss unter einer aus Einzelelementen aufgebauten Dachhaut an einer Dachkonstruktion und einem modulseitigen Anschluss am Rand eines Photovoltaikmoduls.

Zur Montage von Photovoltaik-Modulen (PV-Modulen) auf Schrägdächern sind die unterschiedlichsten Befestigungsvorrichtungen, in der Regel in einer vertikalen Ausrichtung vom First zur Traufe, bekannt, die alle auf einer gemeinsamen Grundidee basieren. Dabei besteht das normale Schrägdach aus Sparren, die in einem Abstand von 60 cm bis 120 cm angeordnet sind und die Dachschräge vorgeben. Auf diesen Sparren werden üblicherweise eine Unterspannbahn zur Abweisung von windgetriebenem Wasser und Schnee mit Konterlattung und die Dachlatten befestigt. Auf den Dachlatten werden die Einzelelemente der Dachhaut verlegt. Hierfür kommen alle bekannten Dachdeckungsmaterialien in Betracht, die aus gleichartigen Einzelelementen bestehen, z.B. Wellplatten aus Faserzement, Blech- oder Holzschindeln und natürliche und künstliche Dachsteine aller Formen. Verallgemeinernd wird in der folgenden Beschreibung für alle Dacheindeckungen aus Einzelelementen der Begriff Dachstein verwendet.

Zur Befestigung von PV-Modulen werden als Befestigungsvorrichtungen bevorzugt Dachhaken aus gebogenem Stahlblech oder Aluminiumprofil auf die Sparren geschraubt und zwischen den Dachsteinen herausgeführt. Um das Herausführen der Dachhaken zu ermöglichen, müssen entweder die Dachsteine in Breite und Stärke des Materials des Dachhakens nachgearbeitet werden, z.B. durch Bearbeitung mit einer Handschleifmaschine, oder die Dachsteine unter Inkaufnahme eines Spalts im Überdeckungsbereich ohne Nacharbeit verlegt werden. Durch die Nacharbeit erlischt jeglicher Garantieanspruch für die Dichtheit der Dachhaut, außerdem können die Dachsteine dabei zerstört oder so geschwächt werden, dass sie im weiteren Verlauf der Arbeiten ersetzt werden müssen oder - als schlimmster Fall, eine deutlich verkürzte Lebensdauer aufweisen. Herabfallende Dachsteinstücke stellen eine große Gefährdung dar. Neben Personen können auch die PV-Module zu Schaden kommen. Im Falle der fehlenden Nacharbeit ist die Optik und auch die Dichtheit der Dachhaut gestört.

Ein Schienensystem, auf dem später die PV-Module angeordnet werden können, kann auf oder an den Dachhaken in der vom Hersteller vorgeschriebenen Weise befestigt werden. Nachteilig bei diesen Systemen ist, dass am PV-Modul angreifende Schnee- und Windlasten senkrecht zur Dachfläche wirken und den Dachhaken in Richtung Dachstein drücken. Ist kein ausreichender Abstand des Dachhakens zum Dachstein vorhanden, kann dieser unter der Last zerstört werden.

### Stand der Technik

Aus der DE 20 2004 008 499 U1 **,** von der die vorliegende Erfindung als nächstliegendem Stand der Technik ausgeht, ist eine Befestigungsvorrichtung für Solarkollektoren und/oder PV-Module bekannt, die je nach Ausführungsform starre Dachhaken zum Überhängen über Dachlatten bzw. Anschrauben an Dachsparren aufweist. Die starren Dachhaken sind entweder aus jeweils zwei Winkeln gebildet, wobei deren Verbindungsstelle eine Verschraubung mit Langloch zur Einstellung der Dicke der Dachlatten aufweist, oder aus drei Winkeln gebildet, wobei wiederum eine Verbindungsstelle zur Einstellung der Dicke der Dachlatte dient und die zweite Verbindungsstelle die Länge des über dem Dachstein liegenden Schenkels, der das PV-Modul aufnehmen soll, ebenfalls mit Hilfe einer Langloch-Verschraubung einzustellen erlaubt. Aus statischen Gründen weisen die Winkel ein massives rechteckiges Metallprofil auf, das auf ganzer Breite die Dachhaut durchdringen muss, d.h. zwischen zwei übereinander überlappend angeordneten Dachsteinen hindurchtritt. Dazu ist es aus optischen und Gründen der Dichtheit der Dachhaut erforderlich, den unter dem starren Dachhaken liegenden Dachstein in der Breite und Stärke des Dachhakenmaterials zu bearbeiten, um eine entsprechende Aufnahmenut zu erhalten. Die Bearbeitung des Dachsteins ist aufwändig, zeitraubend und geht mit dem Erlöschen der Garantie für den Dachstein und damit der Dichtheit der Dachhaut einher. Weiterhin kann der starre Dachhaken bei auftretender Schnee- oder Windlast den ihm unterliegenden Dachstein wegen der Schwächung durch seine Aufnahmenut, in der er flächig aufliegt, zerbrechen und damit ebenfalls die Dichtheit der Dachhaut zerstören und Personen durch Herabfallen gefährden.

Aus der DE 10 2005 043 957 B3 ist eine Befestigungsvorrichtung zur Montage von PV-Modulen auf Dächern bekannt, das einen starren Dachhaken aufweist, der in seiner Grundform einstückig ausgebildet und aus Aluminiumguss gefertigt ist. Die Form des starren Dachhakens erlaubt es sinnvoll nur, ihn an Dachsparren zu befestigen. Seine einstückige Ausführung ohne Einstellmöglichkeiten macht ihn in jeder maßlichen Ausprägung nachteilig jeweils nur für eine Ausführung eines Dachs mit Dachlatten, ggf. Konterlatten und Dachsteinen verwendbar. Auch in diesem Fall ist das Profil des starren Dachhakens aus statischen Gründen massiv rechtwinklig. Es muss wiederum zwischen zwei übereinander überlappend angeordneten Dachsteinen hindurch die Dachhaut durchdringen. Die dazu erforderliche Bearbeitung des
Dachsteins ist mit den zuvor geschilderten Nachteilen verbunden.

Aus der DE 10 2004 057 041 A1 ist eine Befestigungsvorrichtung zur Montage von PV-Modulen auf Dächern bekannt, das wieder einen an Dachsparren befestigbaren Dachhaken ohne Einstellelemente aufweist, so dass er jeweils nur für eine Dachausführung geeignet ist. Der Dachhaken ist in Form einer Biegefeder ausgeführt und sorgt für eine Lagerung der Solarmodul oberhalb der Dachhaut ohne diese zu berühren. Bei Windlast kann so die Federwirkung der Last auf den von dem Dachhaken umfassten Dachstein verringert werden. Allerdings ist auch in diesem Fall das Hakenprofil aus statischen Gründen massiv rechtwinklig. Es muss wiederum zwischen zwei Dachsteinen hindurch die Dachhaut durchdringen und die dazu erforderliche Bearbeitung des Dachsteins ist mit den bereits bekannten Nachteilen verbunden.

Aus der DE 103 44 202 A1 ist eine weitere Befestigungsvorrichtung mit massiven Dachhaken bekannt. Alternativ dazu werden Befestigungsvorrichtungen mit Spezialdachsteinen mit eingelassenen Schienensystemen gezeigt. Die Befestigungsvorrichtung mit Dachhaken weicht nicht wesentlich von den weiter vorne vorgestellten Befestigungsvorrichtungen mit den bekannten Nachteilen ab. Die Befestigungsvorrichtung mit Spezialdachsteinen ist auf die damit produzierten Dachsteinformate beschränkt und damit nicht allgemein einsetzbar.

Aus der DE 10 2005 061 709 A1 ist eine Befestigungsvorrichtung zur Montage von PV-Modulen auf Dächern mit Blecheindeckung bekannt. Hierbei werden die massiven Dachhaken außen an der Dachhaut befestigt, wobei die Dachhaut durchdringende Nieten zum Einsatz kommen. Im Zusammenhang mit der vorliegenden Erfindung ist diese Befestigungsvorrichtung technischer Hintergrund.

In dem **Prospekt I** "ClickFit - Das Montagesystem für PV" der Firma ClickFit, im Internet zugänglich unter der Internetadresse http://www.clickfit.com/download/ClickFit-Brochure-DE.pdf (Stand 09.01.2008) ist in eindeutigen Bildern und zugehörigen Texten das System und die Verwendung von einfachen Dachhaken zur Befestigung von Schienen beschrieben. Die Schienen nehmen dann die Photovoltaikmodule auf. Es wird klar, dass bei unbearbeiteten Dachsteinen die nächste Decklage über den Dachhaken nicht bündig anliegen kann.

In dem **Prospekt II** "LORENZ Solo, Solarmodultragesystem, Schrägdach einlagig" der Firma energiebau solarstromsysteme gmbh, im Internet zugänglich unter der Internetadresse http://eb.etamis.de/05_downloads/03_montage/01_LORENZ_solo.pdf (Stand 09.01.2008) ist in den Grafiken ein weiteres Dachhakensystem beschrieben, das hier eindeutig in dem mittleren Bild auf Seite 3 einen bearbeiteten Dachstein (Biberschwanz) zeigt.

### Aufgabenstellung

Die **Aufgabe** für die vorliegende Erfindung ist es, die beschrieben aufwändigen Dachhaken als Befestigungsvorrichtung für Photovoltaikmodule auf Schrägdächern mit der erforderlichen, aufwändigen und festigkeitsschwächenden Bearbeitung der betroffenen Dachsteine oder der Spaltbildung im Überdeckungsbereich zu vermeiden und ein einfacheres, preiswerteres und sichereres System, welches vor allem auch Personengefährdungen weitgehend vermeidet, bereitzustellen.

Als **Lösung** für diese Aufgabe ist vorgesehen, dass das Halteelement ein ausschließlich auf Zug beanspruchbares flexibles Bauelement ist, das durch die Dachhaut führbar ist, ohne deren Einzelelemente in deren Position oder Form zu verändern. Vorteilhafte Weiterbildungen der Erfindung sind den Unteransprüchen zu entnehmen.

Erfindungsgemäß sollen die Dachhaken durch flexible Bauelemente ersetzt werden. Diese werden an der Dachkonstruktion - Sparren oder Dachlattung - befestigt und zwischen den Dachsteinen herausgeführt. An den flexiblen Bauelementen werden die Photovoltaikmodule direkt, z.B. an ihren Rahmen, oder über Schienensysteme befestigt. Der Vorteil dieses Systems gegenüber der Dachhakenlösung ist eine schnellere und leichtere Fertigstellung der Befestigungsvorrichtung. Die Dachsteine müssen nicht mehr bearbeitet werden. Eine direkte Zerstörung oder eine Spaltbildung wird somit vermieden. Die im flexiblen Bauelement auftretenden Kräfte wirken parallel zur Dachhaut. Damit wird deren indirekte Beschädigung bei auftretenden Wind- und Schneelasten vermieden. Mit der Anwendung des flexiblen Bauelements und der veränderten Krafteinleitung kann die Befestigungsvorrichtung materialsparend ausgeführt werden.

Vorteilhafte Weiterbildungen der erfindungsgemäßen Befestigungsvorrichtung ergeben sich, wenn das flexible Bauelement ein Seil ist. Seil ist Meterware, in allen Formen und Materialien verfügbar und lässt sich mit Standardelementen anschlagen. Besonders vorteilhaft ist es, wenn das Seil ein Drahtseil ist, vorzugsweise aus nichtrostendem Stahl, oder ein Kunstfaserseil ist, bevorzugt aus hochfesten und UV-stabilen Kunstfasern. Aus Stabilitätsgründen muss die Last auf zumindest zwei Seile aufgeteilt werden. Bei Verwendung von nichtrostenden Stahlseilen bzw. hochfesten uv-stabilen Kunstfaserseilen kann deren Querschnitt auch unter Beachtung notwendiger Sicherheitsfaktoren so gering sein, dass eine Beeinträchtigung der davon betroffenen Dachsteine nicht gegeben ist und eine ungestörte Dachhaut bestehen bleibt.

Eine andere vorteilhafte Weiterbildung der erfindungsgemäßen Befestigungsvorrichtung ergibt sich, wenn das Seil mit einer Schutzhülle ummantelt ist. Eine dünne Schutzhülle gegen mechanische Verletzungen des Seils bei rauem Baustellenbetrieb beim Auflegen der Dachsteine vermindert nicht die oben beschriebenen Vorteile einer Befestigungsvorrichtung mit Seilen.

Weiterhin ergeben sich vorteilhafte Weiterbildungen der erfindungsgemäßen Befestigungsvorrichtung, wenn der dachseitige Anschluss eine Seilschlaufe ist, die mit einer Kausch verstärkt und mit einer Seilklemme oder einer Quetschhülse gesichert sein kann, wobei die Seilschlaufe an einem Element der Dachkonstruktion in einen dort fixierten Haken eingehängt oder mit einer Schraube mit Kragen oder einer Unterlegscheibe befestigt werden kann, oder/und der modulseitige Anschluss eine Seilschlaufe ist, die mit einer Kausch verstärkt und mit einer Seilklemme oder einer Quetschhülse gesichert sein kann, wobei die Seilschlaufe direkt am Rand des Photovoltaikmoduls oder an einem das Photovoltaikmodul tragenden Schienensystem mit einer Ringöse oder einem Schaukelhaken jeweils direkt oder mit einem Karabinerhaken oder Schäkel angeschlagen werden kann. Die einfachste und kostengünstigste, zugleich bewährte und sichere Form des Anschlags eines Seils an die Dachunterkonstruktion ist die mit einer Kausch, um das Knicken zu
verhindern. Das Seilende wird um die äußere Kontur der Kausch in deren rinnenförmige Vertiefung gelegt und mit dem ankommenden Seil in einer Quetschhülse oder mit einer verschraubbaren Seilklemme fixiert. Die Kausch kann dann in einen Haken eingehängt oder mit einer Schraubverbindung am der Dachkonstruktion so befestigt werden, dass das Seil möglich geradlinig zwischen den vorgesehenen Dachsteinen hindurch läuft und auf diese Weise weder auf die Dachsteine noch auf sich selbst Druck- und Biegekräfte ausüben kann. Auf der Seite des Photovoltaikmoduls können ebensolche Seilenden mit am Rahmen vorgesehenen Ringösen über Schäkel verbunden werden oder in offene Schaukelhaken eingehängt werden. Es werden damit nur handelsübliche Teile verbaut und keine speziell angefertigten Profile eingesetzt.

Eine andere vorteilhafte Weiterbildung der erfindungsgemäßen Befestigungsvorrichtung ergibt sich, wenn das Seil eine Einrichtung zur Längenverstellung aufweist. Eine sehr einfache Anpassung der Position der Photovoltaikmodule ist über eine Längenänderung der Seile mit Hilfe einer Einrichtung zur Längenverstellung, z.B. einem normalen Seilspanner mit einem Gehäuse und von beiden Seiten über je ein Links- und ein Rechtsgewinde eingreifende Ösenschrauben, möglich.

Ferner können die flexiblen Bauelemente ais Seite mit einem flachen rechteckigen Querschnitt, ebenfalls aus nichtrostenden Stahl oder uvbeständigen Kunstfasern, oder als dünne hochfeste Stahlbänder ausgebildet sein und so vorteilhafte Weiterbildungen der erfindungsgemäßen Befestigungsvorrichtung bilden. Flache rechteckige Querschnitte haben bei erhöhten Lasten oder besonders kleinteiligen Dachsteinen gegenüber runden Querschnitten den Vorteil, dass sie bei steigender Breite eine konstante Höhe aufweisen können und damit weiterhin eine spaltfreie Verlegung der dachsteine garantieren. Insbesondere flache Stahlbänder, wie sie beispielsweise von Maßbändern bekannt sind, können breit und besonders dünn ausgeprägt sein und so auch zwischen eng anliegenden Dachsteinen hindurchtreten. Anschlusselemente können dann z.B. genietet werden.

Eine andere vorteilhafte Weiterbildung der Befestigungsvorrichtung ergibt sich, wenn der dachseitige Anschluss eine Verdickung des Halteelements ist, die von einem Aufnahmeelement einer flachen Anschlagplatte gehalten wird, wobei die flache Anschlagplatte an einer Dachsparre befestigbar ist und das Aufnahmeelement mit der Anschlagplattefest verbunden ist und einen durchgehenden Längsschlitz zum Einlegen des Halteelements und eine nicht durchgehende vergrößerte Öffnung zur Aufnahme der Verdickung des Halteelements aufweist. Bei dieser Form der Befestigungsvorrichtung wird die unmittelbar auf den Dachsparren aufliegende Unterspannbahn nur von einigen wenigen Nägeln oder Schrauben zur Fixierung der Anschlagplatte und nicht weitgehend unkontrollierbar von dem Halteelement selbst durchdrungen. Die Umgebung der Nagel- oder Schraublöcher in der Unterspannbahn wird dabei auch noch durch die ganze Auflagefläche der Anschlagplatte gesichert, so es nicht zum Eindringen von Feuchtigkeit oder zum Reissen der Unterspannbahn kommen kann. Die Verdickung des Halteelements kann bei einem Seil z.B. eine Quetschhülse, ein Spleiss oder eine Seilklemme, bei einem flachen Stahlband ein durch Schrauben oder Nieten fixiertes verdicktes Flachmaterial sein. In allen Fällen ist es von Vorteil, wenn die vergrößerte Öffnung zur Aufnahme der Verdickung des Halteelements dem Profil der Verdickung entspricht. Die nicht durchgehende vergrößerte Öffnung sorgt dafür, dass die Verdickung des Halteelements und damit das Halteelement selbst in dem Aufnahmeelement festgehalten und die Gewichtskraft der PV-Module über das Halteelement sicher in die Dachsparre eingeleitet wird.

### Ausführungsbeispiele

Ausbildungsformen der Befestigungsvorrichtung für Photovoltaikmodule auf Schrägdächern nach der Erfindung werden nachfolgend zu deren weiteren Verständnis anhand der schematischen Figuren näher erläutert. Dabei ist die Erfindung aber nicht auf die Ausführungsbeispiele beschränkt. Im
Einzelnen zeigt
- **Figur 1**: einen Schnitt durch eine Dachhaut mit einem Photovoltaikmodul und einer Befestigungsvorrichtung mit Seil,
- **Figur 2**: eine Befestigungsvorrichtung mit Seil mit einer Einrichtung zur Längenverstellung,
- **Figur 3**: eine Modulanordnung mit Befestigungsvorrichtungen mit Stahlband und
- Figur 4: eine flache Anschlagplatte mit Aufnahmeelement.

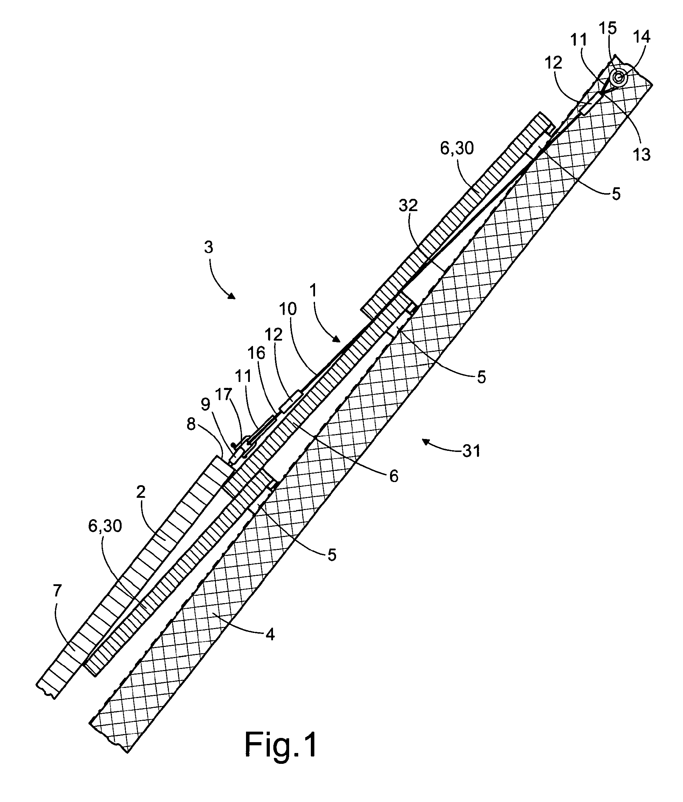

**Figur 1** zeigt eine Befestigungsvorrichtung **1** für Photovoltaikmodule **2** in einem Schnitt durch eine Dachkonstruktion **31.** Sie besteht im gezeigten Ausführungsbeispiel aus einem Dachsparren **4,** Dachlatten **5** und einer dachhaut **3** aus einer Unterspannbahn **32** und Einzelelementen **30,** hier Dachsteinen **6.** Das Photovoltaikmodul **2** liegt mit seinem Rahmen **7** auf den Dachsteinen **6** auf. Am oberen Rand **8** des Rahmens **7** des Photovoltaikmoduls **2** sind Ringösen **9** angebracht. Die
Befestigungsvorrichtung **1** umfasst ein Halteelement **24,** bei dem es sich um ein ausschließlich auf Zug beanspruchbares flexibles Bauelement handelt, das durch die Dachhaut **3** führbar ist, ohne deren Einzelelemente **30,** hier Dachsteine **6,** in deren Position oder Form zu verändern. Im gezeigten Ausführungsbeispiel besteht das Halteelement **24** aus einem Seil **10,** das an beiden Enden um Kauschen **11** geführt und in diesem Ausführungsbeispiel mit Quetschhülsen **12** gesichert ist. Das so ausgerüstete Seil **10** wird mit seinem dachseitigen Anschluss **13** mit einer durch die Kausch **11** geführten Schraube **14** mit großer Unterlegscheibe **15** am Dachsparren **4** befestigt. Das Seil **10** wird dann in nahezu gerader Linie zwischen den nächstgelegenen Dachsteinen **6** hindurchgeführt und mit seinem modulseitigen Anschluss **16** über einen Schäkel **17** mit der Ringöse **9** verbunden.

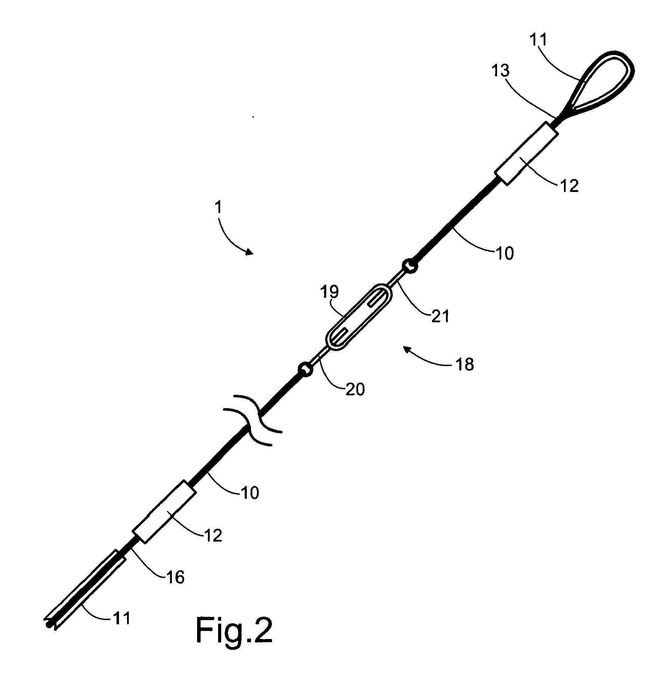

**Figur 2** zeigt ein Halteelement **24,** bei dem das Seil **10** durch eine Einrichtung zur Längenverstellung **18** in der Nähe des oberen Endes **13** unterbrochen ist. An den dach- und modulseitigen Anschlüssen **13,16** wird das Seil **1** um die Kauschen **11** geführt, die hier am oberen Ende **13** in der Draufsicht und am unteren Ende **16** in der Seitenansicht gezeigt sind, und mit Quetschhülsen **12** gesichert. Die Einrichtung zur Längenverstellung **18** weist ein Gehäuse **19** und je einen Ringbolzen **20** mit Rechtsgewinde und einen Ringbolzen **21** mit Linksgewinde auf. Die Befestigung des Seils **10** an den Ringbolzen **20** ist hier nicht weiter ausgeführt. Bei einer Drehung des Gehäuses **19** im Uhrzeigersinn vom oberen Ende **13** her gesehen, wird das Halteelement **24** verkürzt, bei einer Drehung gegen den Uhrzeigersinn wird das Halteelement **24** verlängert.

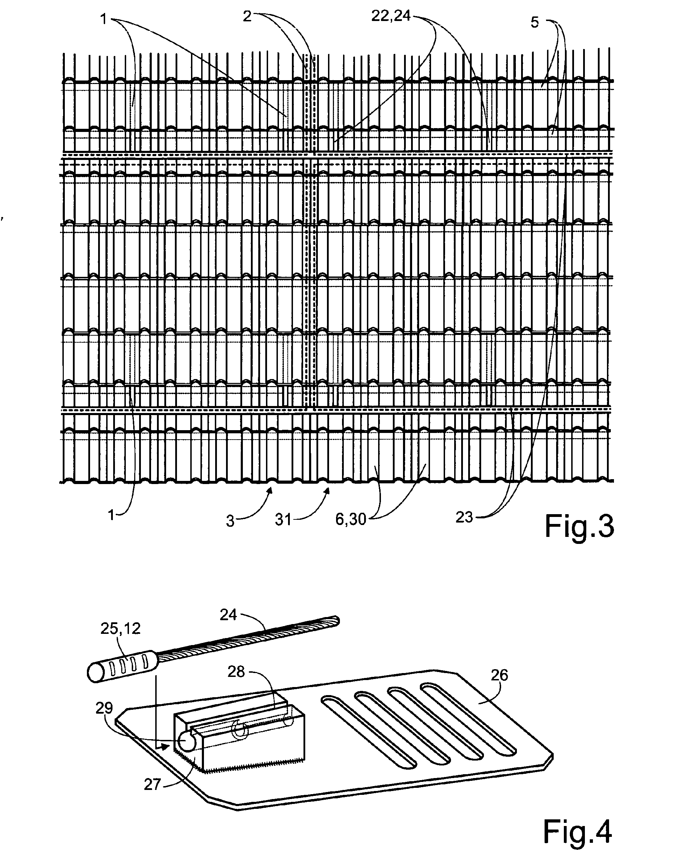

**Figur 3** zeigt eine Modulanordnung mit Halteelementen **24** mit Stahlband **22** auf Tragschienen **23.** Die Tragschienen **23** liegen auf der Dachhaut **3** auf und sind an Stahlbändern **22** befestigt, die nach oben unter dem nächstgelegenen Einzelelement **30,** hier Dachstein **6,** die Dachhaut **3** durchdringen und an der nächsten Dachlatte **5** der Dachkonstruktion **31** angeschlagen sind. Dachlatten **5** und die unterhalb der Dachhaut **3** verlaufenden Teile der Stahlbänder **22** sind gestrichelt angedeutet. Ebenso gestrichelt sind die in den Tragschienen **23** gehaltenen PV-Module **2** dargestellt. Weitere Elemente zur Verbindung der PV-Module **2** untereinander sind nicht dargestellt.

**Figur 4** zeigt eine flache Anschlagplatte **26,** die z.B. über Langlöcher durch Nägel oder Schrauben mit einer nicht weiter dargestellten Dachsparre **4** verbunden werden kann. Sie weist ein Aufnahmeelement **27** auf, das in dem Ausführungsbeispiel ein mit der Anschlagplatte **26** fest verbundenes quaderförmiges Bauteil ist. Das Aufnahmeelement **27** weist seinerseits einen durchgehenden Längsschlitz **28** auf, um das Halteelement **24** einlegen zu können. Eine nicht durchgehende vergrößerte Öffnung **29** nimmt schließlich die Verdickung **25** des Halteelements **24** auf. In der Figur ist ein rundes Seil als Halteelement **24** mit einer Quetschhülse **12** als Verdickung **25** beispielhaft angedeutet.

### Bezugszeichenliste

- **1**: Befestigungsvorrichtung
- **2**: Photovoltaikmodul
- **3**: Dachhaut
- **4**: Dachsparre
- **5**: Dachlatte
- **6**: Dachstein
- **7**: Rahmen
- **8**: oberer Rand
- **9**: Ringöse
- **10**: Seil
- **11**: Kausch
- **12**: Quetschhülse
- **13**: dachseitiger Anschluss
- **14**: Schraube
- **15**: Unterlegscheibe
- **16**: modulseitiger Anschluss
- **17**: Schäkel
- **18**: Einrichtung zur Längenverstellung
- **19**: Gehäuse
- **20**: Ringbolzen mit Rechtsgewinde
- **21**: Ringbolzen mit Linksgewinde
- **22**: Stahlband
- **23**: Tragschiene
- **24**: Halteelement
- **25**: Verdickung
- **26**: Anschlagplatte
- **27**: Aufnahmeelement
- **28**: Längsschlitz
- **29**: Öffnung
- **30**: Einzelelement
- **31**: Dachkonstruktion
- **32**: Unterspannbahn

## Patentansprüche

1. Befestigungsvorrichtung für Photovoltaikmodule auf Schrägdächern mit zumindest einem Halteelement mit einem dachseitigen Anschluss unter einer aus Einzelelementen aufgebauten Dachhaut an einer Dachkonstruktion und einem modulseitigen Anschluss am Rand eines Photovoltaikmoduls,
**dadurch gekennzeichnet, dass**
das Halteelement (24) ein ausschließlich auf Zug beanspruchbares flexibles Bauelement ist, das durch die Dachhaut (3) führbar ist, ohne deren Einzelelemente (30) in deren Position oder Form zu verändern.

2. Befestigungsvorrichtung nach Anspruch 1,
**dadurch gekennzeichnet, dass**
das Halteelement (24) ein Seil (10) ist.

3. Befestigungsvorrichtung nach Anspruch 2,
**dadurch gekennzeichnet, dass**
das Seil (10) ein Drahtseil ist.

4. Befestigungsvorrichtung nach Anspruch 3,
**dadurch gekennzeichnet, dass**
das Drahtseil aus nichtrostendem Stahldraht besteht.

5. Befestigungsvorrichtung nach Anspruch 2,
**dadurch gekennzeichnet, dass**
das Seil (10) ein Kunstfaserseil ist.

6. Befestigungsvorrichtung nach Anspruch 5,
**dadurch gekennzeichnet, dass**
das Kunstfaserseil aus hochfesten, UV-stabilen Kunstfasern besteht.

7. Befestigungsvorrichtung nach Anspruch 2,
**dadurch gekennzeichnet, dass**
das Seil (10) mit einer Schutzhülle ummantelt ist.

8. Befestigungsvorrichtung nach Anspruch 2,
**dadurch gekennzeichnet, dass**
der dachseitige Anschluss (13) eine Seilschlaufe ist, die mit einer Kausch (11) verstärkt und mit einer Seilklemme oder einer Quetschhülse (12) gesichert ist, wobei die Seilschlaufe an einem Element der Dachkonstruktion (31) in einen dort fixierten Haken eingehängt oder mit einer Schraube (14) mit Kragen oder einer Unterlegscheibe (15) befestigt werden kann.

9. Befestigungsvorrichtung nach Anspruch 2,
**dadurch gekennzeichnet, dass**
der modulseitige Anschluss (16) eine Seilschlaufe ist, die mit einer Kausch (11) verstärkt und mit einer Seilklemme oder einer Quetschhülse (12) gesichert ist, wobei die Seilschlaufe direkt am Rand des Photovoltaikmoduls (2) oder an einem das Photovoltaikmodul (2) tragenden Schienensystem (23) mit einer Ringöse (9) oder einem Schaukelhaken jeweils direkt oder mit einem Karabinerhaken oder Schäkel (17) angeschlagen werden kann.

10. Befestigungsvorrichtung nach Anspruch 2,
**dadurch gekennzeichnet, dass**
das Seil (10) eine Einrichtung zur Längenverstellung (18) aufweist.

11. Befestigungsvorrichtung nach Anspruch 2,
**dadurch gekennzeichnet, dass**
das Seil (10) einen flachen rechteckigen Querschnitt aufweist.

12. Befestigungsvorrichtung nach Anspruch 1,
**dadurch gekennzeichnet, dass**
das Halteelement (24) ein dünnes hochfestes Stahlband (22) ist.

13. Befestigungsvorrichtung nach Anspruch 1,
**dadurch gekennzeichnet, dass**
der dachseitige Anschluss (13) eine Verdickung (25) des Halteelements (24) ist, die von einem Aufnahmeelement (27) einer flachen Anschlagplatte (26) gehalten wird, wobei die flache Anschlagplatte (26) an einer Dachsparre (4) befestigbar ist und das Aufnahmeelement (27) mit der Anschlagplatte (26) fest verbunden ist und einen durchgehenden Längsschlitz (28) zum Einlegen des Halteelements (24) und eine nicht durchgehende vergrößerte Öffnung (29) zur Aufnahme der Verdickung (25) des Halteelements (24) aufweist.
